## Europäisches Patentamt
## European Patent Office
## Office européen des brevets

(19)

(11) Numéro de publication : **0 190 517**
**B1**

(12)

# FASCICULE DE BREVET EUROPÉEN

(45) Date de publication du fascicule du brevet :
13.12.89

(21) Numéro de dépôt : 85402363.7

(22) Date de dépôt : 02.12.85

(51) Int. Cl.⁴ : **C 08 G 18/78, C 08 G 18/79,**
**C 08 G 18/42, B 32 B 17/10,**
**C 03 C 17/32, C 08 J 7/04**

(54) Couche de revêtement ayant des propriétés d'autocicatrisation pour des vitrages notamment ceux exposés aux agents atmosphériques.

(30) Priorité : 06.12.84 FR 8418603

(43) Date de publication de la demande :
13.08.86 Bulletin 86/33

(45) Mention de la délivrance du brevet :
13.12.89 Bulletin 89/50

(84) Etats contractants désignés :
AT BE CH DE FR GB IT LI LU NL SE

(56) Documents cités :
EP--A-- 0 000 420
EP--A-- 0 133 090
DE--A-- 2 729 226
FR--A-- 2 115 452
FR--A-- 2 216 333
FR--A-- 2 398 606

(73) Titulaire : SAINT-GOBAIN VITRAGE
"Les Miroirs" 18, avenue d'Alsace
F-92400 Courbevoie (FR)
BE CH FR GB IT LI LU NL SE AT
VEGLA VEREINIGTE GLASWERKE
Viktoriaallee 3-5
D-5100 Aachen (DE)
DE

(72) Inventeur : Musil, Ingrid
Kronenberg 133
D-5100 Aachen (DE)
Inventeur : Holzer, Gerhard, Dr.
Dr. Josef-Lamby-Strasse 2
D-5100 Aachen (DE)
Inventeur : Raedisch, Helmer, Dr.
Nizzaallee 36
D-5100 Aachen (DE)

(74) Mandataire : Muller, René et al
SAINT-GOBAIN RECHERCHE 39, quai Lucien Lefranc
F-93304 Aubervilliers (FR)

## Description

La présente invention concerne une couche de revêtement en polyuréthane transparent ayant des propriétés d'autocicatrisation pour des vitrages en verre et/ou en matière plastique, la couche de revêtement étant préparée à partir d'un mélange réactionnel contenant un composant isocyanate plurifonctionnel et en particulier trifonctionnel et un composant polyol plurifonctionnel, éventuellement un catalyseur de réaction et d'autres substances auxiliaires.

Les couches de revêtement en polyuréthane ayant des propriétés d'autocicatrisation sont utilisées notamment en tant que couches anti-éclats dans des vitrages en verre de silicate, par exemple dans des pare-brise de véhicules automobiles. Cette application décrite par exemple dans les publications de brevet français 2 187 719 et 2 251 608. Ces couches, disposées sur la face des vitrages orientée vers l'habitacle, empêchent le contact direct avec les bords aigus des fragments de verre dans le cas d'une rupture du vitrage. Dans cette configuration, les couches de revêtement sont protégées par la ou les feuilles de verre contre les influences atmosphériques directes.

Des couches du genre indiqué sont également utilisées en tant que couches de revêtement pour des matières plastiques transparentes. Les publications de brevets allemands 2 058 504, 2 634 816, 3 201 849 décrivent une telle application. Dans ce cas, ces couches de polyuréthane servent à améliorer la résistance à la rayure de la matière plastique. Les couches de polyuréthane citées ci-dessus ont en effet la propriété d'être autocicatrisables, c'est-à-dire que ce sont des couches desquelles les déformations superficielles disparaissent spontanément après un cours laps de temps, la durée de disparition dépendant généralement de la température.

De telles couches de revêtement autocicatrisables en polyuréthane peuvent trouver leur application aussi comme couches de revêtement d'une surface exposée à l'atmosphère extérieure de vitrages en verre et/ou en matière plastique, soit pour améliorer la résistance à la rayure des matières plastiques, soit pour améliorer la résistance à l'abrasion du verre. Il est en effet connu que ces couches de revêtement molles conviennent aussi éminemment pour améliorer sensiblement la résistance à l'abrasion du verre, par exemple lors d'une sollicitation par ruissellement de sable.

Les couches de revêtement en polyuréthane connues ont de remarquables propriétés non seulement dans le domaine de la résistance à la rayure et des autres propriétés d'usage, mais aussi surtout dans le domaine de la durabilité de ces propriétés à long terme aussi longtemps que ces couches ne sont pas exposées simultanément à l'influence de la lumière, de la chaleur et de l'humidité, c'est-à-dire aussi longtemps qu'elles ne sont pas exposées directement à l'atmosphère libre, à savoir au rayonnement solaire direct et simultanément à l'humidité et à la pluie. Il est apparu lors d'une telle exposition de ces couches de revêtement aux intempéries naturelles, qu'apparemment en conséquence de l'effet de la lumière et de l'attaque hydrolytique simultanée par l'eau, la surface des couches de revêtement est attaquée à la longue. Après un certain temps, cette dégradation de la surface est perceptible à l'oeil nu et se poursuit sans interruption. Par conséquent, les couches de revêtement de constitutions connues ne conviennent pas à long terme pour une utilisation sur une face extérieure d'un vitrage, c'est-à-dire exposées directement à l'atmosphère extérieure.

On connait encore d'après la publication de brevet français FR-A-2 216 333 un système à deux composants, apte à former un polyuréthane utilisable comme liant pour les peintures.

L'invention propose d'utiliser en tant que couche de revêtement, une nouvelle couche transparente, autocicatrisable, en polyuréthane du genre décrit ci-dessus, qui présente, en plus des bonnes propriétés physiques et mécaniques requises, notamment de résistance à la rayure et à l'abrasion, une résistance accrue contre les effets des intempéries, en particulier contre l'action simultanée de la lumière et de l'humidité.

La couche utilisée selon l'invention est formée à partir d'un mélange réactionnel comprenant un composant isocyanate choisi parmi les biurets ou les isocyanurates trifonctionnels du 1,6- hexaméthylène-diisocyanate monomère, ayant une teneur en radicaux NCO de 15 à 25 % en poids et en tant que composant polyol des polyesterpolyols de fonctionnalité supérieure à 2 ayant une teneur en radicaux OH de 3 à 12 % en poids, le rapport NCO/OH, exprimé en équivalents, du mélange réactionnel étant compris entre 0,9 et 1,1.

Grâce à l'utilisation d'un composant isocyanate et d'un composant polyol de constitutions chimiques bien définies, on obtient des couches de revêtement en polyuréthane de structure chimique également définie, qui présentent, en plus des propriétés physico-mécaniques nécessaires pour la résistance à la rayure et des propriétés de mise en oeuvre et d'usage, également la résistance souhaitée aux intempéries. Ils se prêtent par conséquent aussi à une utilisation sur les surfaces extérieures exposées directement aux intempéries.

Pour le composant isocyanate, on utilise par exemple un polyisocyanurate essentiellement trifonctionnel issu du 1,6-hexaméthylènediisocyanate ayant une teneur en radicaux NCO de 20 à 23 % en poids environ. Dans une variante, on peut utiliser un biuret essentiellement trifonctionnel issu du 1,6-hexaméthylène-diisocyanate ayant une teneur en radicaux NCO de 21 à 25 % en poids environ.

Pour le composant polyol, on utilise dans une forme de réalisation avantageuse de l'invention, un polyesterpolyol faiblement ramifié à base de triméthylolpropane, de 1,6-hexanediol, d'acide adipique et d'acide o-et i-phtalique, ayant une teneur en radicaux OH de 3 à 5 % en poids.

Dans une autre forme de réalisation avantageuse, on utilise en tant que composant polyol un lactonepolyesterpolyol trifonctionnel à base de triméthylolpropane ou de glycérol et d'ε-caprolactone ayant une teneur en radicaux OH de 8 à 12 % en poids correspondant environ.

Le choix d'un polyesterpolyol est tout à fait surprenant car il est bien connu de l'homme de métier que les polyesterpolyols résistent généralement mal à l'hydrolyse. L'invention va à l'encontre de ce qui était connu.

Au contraire des mélanges réactionnels formant les couches de revêtement connues en polyuréthane, notamment des publications de brevets français 2 251 608 et 2 398 606, dans lesquels un rapport NCO/OH de 0,8 s'était révélé particulièrement avantageux, on utilise selon l'invention, un mélange réactionnel présentant un rapport en équivalents NCO/OH de 0,9 à 1,1 et de préférence d'environ 1, c'est-à-dire le rapport stœchiométrique. Les propriétés les plus favorables sont alors atteintes lors de l'épreuve de vieillissement.

Le mélange réactionnel utilisé pour fabriquer la couche de revêtement selon l'invention peut contenir des additifs tels des agents d'étalement, des solvants organiques, des agents de protection contre la lumière, des agents anti-UV. Ces additifs sont généralement ajoutés au composant polyol. En tant qu'agent d'étalement, on peut citer des huiles et des résines de silicone (oxyalkylènepolysiloxanes), des esters fluoroalkylés. En tant qu'agent de protection contre la lumière on peut citer les amines à empêchement stérique, en quantités comprises entre 0,5 à 2 % en poids par rapport au poids du polyol. En tant qu'agent anti-UV on peut citer les benzotriazoles substitués en quantités comprises entre 0,5 à 5 % en poids par rapport au poids du polyol.

La couche selon l'invention est généralement formée par coulée du mélange réactionnel comme décrit par exemple dans les publications de brevets européens 0 132 198 et 0 133 090.

Elle peut aussi être formée par pulvérisation du mélange réactionnel ou encore par une injection réactive dans un moule. La couche peut être formée in situ sur le vitrage à recouvrir. Elle peut être formée sur un support de formation duquel elle est ensuite retirée après avoir éventuellement été associée à une ou plusieurs autres couches de matières plastiques. La feuille obtenue est assemblée ensuite au substrat pour constituer le vitrage désiré.

Par couche, on entend selon l'invention aussi bien la couche sur un substrat que sous forme d'une feuille indépendante à une ou plusieurs couches.

Divers exemples de préparation des couches de revêtement conformes à l'invention sont décrits ci-après.

Exemple 1

On estérifie 460 parties en poids de 1,6-hexanediol et 70 parties de triméthylolpropane avec 167 parties d'acide adipique, 56 parties d'acide o-phtalique et 247 parties d'acide i-phtalique jusqu'à atteindre une teneur en radicaux OH libres d'environ 4,3 % en poids et un indice d'acide (DIN 53.402) d'environ 1. Le polyesterpolyol faiblement ramifié ainsi obtenu constitue le composant polyol pour le mélange réactionnel. On ajoute au polyesterpolyol 0,1 % en poids d'un ester fluoroalkylé comme agent d'étalement et 1 % en poids de sébaçate de bis (1,2,2,6,6-pentaméthyl-4-pipéridyle) comme agent de protection contre la lumière.

Pour la préparation du mélange réactionnel on chauffe 100 g d'un polyisocyanate essentiellement trifonctionnel à savoir un biuret de 1,6-hexaméthylènediisocyanate, ayant une teneur en radicaux NCO libres de 23 % en poids, avec 216 g du polyesterpolyol décrit ci-dessus jusqu'à une température de 80 °C et on les agite à cette température pendant 10 minutes. Le rapport en équivalents NCO/OH du mélange de réaction est ainsi de 1.

Après le mélange des deux composants, on étale à la racle le mélange réactionnel en une épaisseur de couche de 0,5 mm sur des feuilles planes qu'on a préalablement chauffées à 70 °C. Pour le durcissement de la couche, on conserve les feuilles de verre revêtues pendant une durée de 30 minutes à une température de 90 °C, par exemple dans une étuve à circulation d'air à réglage thermostatique.

Après le durcissement des couches de revêtement ainsi préparées et un conditionnement à 20 °C dans une humidité relative de 50 %, on détache les couches de polyuréthane des supports en verre en vue de déterminer leurs propriétés mécaniques et on mesure sur les feuilles la résistance en traction et l'allongement en traction suivant la norme DIN 53455, ainsi que le module E suivant la norme DIN 53457. On détermine en outre la résistance à la propagation de la déchirure suivant Graves conformément à la norme DIN 53515. On détermine de plus la résistance à l'abrasion suivant la norme ECE R-43 et la résistance à la rayure suivant Erichsen sur les couches de polyuréthane adhérant aux supports en verre. Lors de la détermination de la résistance à la rayure suivant Erichsen, on utilise un montage expérimental tel que décrit dans la norme DIN 53799, sauf que le diamant de rayage conique utilisé présente un angle conique de 50 degrés et un rayon de courbure de 15 μm au sommet du cône. Pour l'évaluation de la résistance à la rayure, on indique le poids de sollicitation le plus élevé du diamant de rayage pour lequel aucune lésion visible permanente de la surface n'est identifiable.

L'évaluation de l'état de surface des couches de polyuréthane est effectuée par voie visuelle.

Les résultats des mesures mécaniques sont rassemblés au tableau 1 ci-après. Le tableau indique de plus, pour les différentes propriétés mécaniques, les intervalles dans lesquels les valeurs mesurées doivent se situer pour que la couche de polyuréthane puisse satisfaire aux critères relatifs au comportement d'usage et en particulier relatifs au caractère autocicatrisable.

Exemple comparatif

On opère de la même façon que dans l'exemple 1 mais en prenant en tant que composant polyol 81,3 g d'un polyétherpolyol d'un poids moléculaire d'environ 450 obtenu par condensation d'oxyde de 1,2-propylène avec du 2,2-bis (hydroxyméthyl)-1-butanol ayant une teneur en radicaux OH libres de 11,5 environ et en ajoutant au polyol 0,05 % en poids par rapport au poids du polyol de dilaurate de dibutylétain en tant que catalyseur, 0,1 % en poids d'un ester fluoroalkylé en tant qu'agent d'étalement, 1 % en poids de sébaçate de bis (1,2,2,6,6-pentaméthyl-4-pipéridyle) en tant qu'agent de protection contre la lumière.

Tableau 1

| | Résistance en traction N/mm² | Allongement en traction % | Résistance à la propagation de la déchirure N/mm | Module E N/mm² | Abrasion turbidité % | Résistance à la rayure P |
|---|---|---|---|---|---|---|
| Valeurs limites de l'intervalle requis | 5–40 | 60 | 5–20 | 2–20 | 4 | 10 |
| Exemple 1 | 9,87 | 131,1 | 11,8 | 6,46 | 2,71 | 24 |
| Exemple comparatif | 10,4 | 115 | 6,5 | 13,0 | 3,5 | 12 |

Le tableau 1 montre que toutes les propriétés mécaniques de la couche selon l'exemple entrent dans les limites exigées.

Pour examiner l'influence de l'atmosphère libre sur l'état de la surface, on expose un certain nombre d'éprouvettes librement aux intempéries, en l'occurrence pendant une durée de plusieurs mois. Après écoulement de cette durée, aucune altération de la surface de la couche de polyuréthane n'était observable. Les mesures de brillance indiquent une perte extrêmement faible, inférieure à 1 %, de la brillance.

Cette perte de brillance est de plus de 50 % dans le cas de l'exemple témoin et ce malgré l'utilisation d'agent de protection contre la lumière.

Exemple 2

Pour la préparation du mélange réactionnel, on mélange vivement pendant 10 minutes à 40 °C, 100 g d'un polyisocyanate essentiellement trifonctionnel contenant des radicaux isocyanurate à base de 1,6-hexaméthylènediisocyanate, ayant une teneur en radicaux NCO libres de 21,5 % en poids, avec 94,2 g d'une polycaprolactone trifonctionnelle ayant une teneur en radicaux OH libres de 9,3 % en poids. Le rapport NCO/OH est ainsi de 1. On ajoute au préalable comme additifs à la polycaprolactone, 0,015 % en poids par rapport au poids de la polycaprolactone, de dilaurate de dibutylétain comme catalyseur de réaction, 0,1 % en poids d'un ester fluoroalkylé comme agent d'étalement et 1 % en poids de sébaçate de bis (1,2,2,6-6-pentaméthyl-4-pipéridyle) comme agent de protection contre la lumière. Après mélange des deux composants, on applique à la racle le mélange réactionnel en une épaisseur de couche de 0,5 mm sur des feuilles de verre planes qu'on a au préalable chauffées à 70 °C. On exécute le durcissement de la couche à nouveau à 90 °C pendant une durée de 30 minutes dans une étuve à circulation d'air à réglage thermostatique.

Pour examiner l'influence du vieillissement dans différentes conditions ambiantes, on conserve dans

4

ces conditions ambiantes différentes, des vitrages en verre revêtus de cette couche de polyuréthane et on détermine ensuite les propriétés mécaniques et les propriétés optiques. Le tableau 2 ci-après rassemble les résultats de mesure des propriétés mécaniques, les différentes éprouvettes ayant été soumises aux manipulations suivantes :

Eprouvette A : mesure immédiatement après durcissement de la couche de polyuréthane.
Eprouvette B : 21 jours de conservation au laboratoire dans les conditions d'ambiance normales.
Eprouvette C : 2 heures de conservation à 60 °C dans une étuve à circulation d'air.
Eprouvette D : 7 jours de conservation à 50 °C et une humidité atmosphérique relative de 100 %.

Tableau 2

| | Résistance en traction $N/mm^2$ | Allongement en traction % | Résistance à la propagation de la déchirure $N/mm$ | Module E $N/mm^2$ | Abrasion turbidité % | Résistance à la rayure P |
|---|---|---|---|---|---|---|
| Valeurs limites de l'intervalle requis | 5–40 | 60 | 5–20 | 2–20 | 4 | 10 |
| Eprouvette A | 24,0 | 119,9 | 9,5 | 8,8 | 2,3 | 34 |
| Eprouvette B | 22,4 | 100,8 | 11,7 | 11,8 | 2,1 | 46 |
| Eprouvette C | 24,0 | 121,5 | 13,1 | 9,7 | 2,5 | 41 |
| Eprouvette D | 29,5 | 114 | 13,8 | 13,1 | 2,15 | 35 |

Les résultats de mesure montrent à nouveau que même après les traitements de vieillissement artificiels les plus divers, les propriétés physico-mécaniques se situent entre les limites imposées, c'est-à-dire qu'aucune altération significative de ces propriétés n'est observable. Pour une autre série d'éprouvettes, on exécute une exposition directe aux intempéries au cours de plusieurs mois en exposant les vitrages en verre munis des couches de revêtement, à l'action directe de l'atmosphère extérieure. Après exposition, on procède à une évaluation visuelle de la couche de revêtement et on effectue en outre des mesures de brillance suivant la norme DIN 67530. L'évaluation visuelle indique qu'il n'y a aucune altération visible à la surface ou dans la profondeur de la couche de revêtement. Les mesures de brillance indiquent une diminution extrêmement faible de la brillance superficielle, d'environ 0,5 % par comparaison avec les valeurs de mesures sur les mêmes éprouvettes avant exposition aux intempéries.

La couche de revêtement selon l'invention peut être utilisée dans toutes les applications décrites précédemment. Elle est aussi utilisée en étant associée à une couche de polyuréthane présentant des propriétés d'absorbeur d'énergie pour former une feuille à deux couches comme décrit par exemple dans les publications de brevets européens 0 132 198 et 0 133 090, cette feuille à deux couches étant avantageusement utilisée dans les vitrages feuilletés de sécurité.

## Revendications

1. Utilisation d'une couche de revêtement en polyuréthane transparent ayant des propriétés d'autocicatrisation pour des vitrages ou objets transparents en verre et/ou en matière plastique, formée à partir d'un mélange réactionnel comprenant un composant isocyanate plurifonctionnel et un composant polyol plurifonctionnel, éventuellement un catalyseur de réaction et d'autres substances auxiliaires, caractérisée en ce que le composant isocyanate du mélange réactionnel est choisi parmi les biurets ou les isocyanurates trifonctionnels du 1,6-hexaméthylène-diisocyanate, ayant une teneur en radicaux NCO de 15 à 25 % en poids et le composant polyol du mélange réactionnel est choisi parmi les polyesterpolyols de fonctionnalité supérieure à 2 ayant une teneur en radicaux OH de 3 à 12 % en poids, et en ce que le mélange réactionnel présente un rapport NCO/OH, exprimé en équivalents, de 0,9 à 1,1 et de préférence d'environ 1.

2. Utilisation d'une couche de revêtement en polyuréthane suivant la revendication 1, caractérisée en ce qu'on utilise comme composant polyol un polyesterpolyol faiblement ramifié à base de triméthylolpropane, de 1,6-hexanediol, d'acide adipique, d'acide o-phtalique et d'acide i-phtalique, ayant une teneur en radicaux OH de 3 à 5 % en poids.

3. Utilisation d'une couche de revêtement en polyuréthane suivant la revendication 1, caractérisée en ce qu'on utilise comme composant polyol une polycaprolactone trifonctionnelle ayant une teneur en radicaux OH de 8 à 12 % en poids.

4. Utilisation d'une couche de revêtement en polyuréthane suivant une des revendications 1 à 3, caractérisée en ce que le mélange réactionnel contient au moins un des additifs suivants : du dilaurate de dibutylétain comme catalyseur de réaction, un ou plusieurs composés chimiques tels que des huiles de silicone, des résines de silicone ou des esters fluoroalkylés en une quantité de 0,05 à 0,15 % en poids comme agent d'étalement, 0,5 à 2 % en poids de sébaçate de bis (1,2,2,6,6-pentaméthyl-4-pipéridyle) comme agent de protection contre la lumière et éventuellement des agents absorbant l'ultraviolet tels que des benzotriazoles substitués en une quantité de 0,5 à 5 % en poids.

5. Vitrage comprenant une couche de revêtement selon une des revendications 1 à 4.

6. Feuille de matière plastique caractérisée en ce qu'elle comprend une couche de polyuréthane selon une des revendications 1 à 4.

7. Feuille selon la revendication 6, caractérisée en ce que la couche de polyuréthane est associée à une couche de polyuréthane ayant des propriétés d'absorbeur d'énergie.

## Claims

1. Use of a covering layer of transparent polyurethane having selfhealing properties for panes or transparent objects of glass and/or of plastics material, formed from a reaction mixture comprising a multifunctional isocyanate component and a multifunctional polyol component, possibly also a reaction catalyst and other auxiliary substances, characterized in that the isocyanate component of the reaction mixture is selected from among the biurets or trifunctional isocyanurates of 1,6-hexamethylene diisocyanate, having an NCO radicals content of 15 to 25 % by weight and the polyol component of the reaction mixture is selected from among the polyester polyols with a functionality greater than 2 and having an OH radicals content of 3 to 12 % by weight, and in that the reaction mixture has a ratio NCO/OH, expressed in equivalents, of 0.9 to 1.1 and preferably of approximately 1.

2. Use of a covering layer of polyurethane according to Claim 1, characterized in that there are used, as polyol component, a weakly branched polyester polyol on a basis of trimethylol propane, of 1,6-hexanediol, of adipic acid, of o-phthalic acid and of i-phthalic acid, having an OH radicals content of 3 to 5 % by weight.

3. Use of a covering layer of polyurethane according to Claim 1, characterized in that there is used, as polyol component, a trifunctional polycaprolactone having an OH radicals content of 8 to 12 % by weight.

4. Use of a covering layer of polyurethane according to one of Claims 1 to 3, characterized in that the reaction mixture contains at least one of the following additives : dibutyl tin dilaurate as reaction catalyst, one or more chemical compounds such as silicone oils, silicone resins or fluoroalkylated esters in a proportion of 0.05 to 0.15 % by weight as spreading agent, 0.5 to 2 % by weight of bis (1,2,2,6,6-pentamethyl-4-piperidyle) sebacate as light protective agent and, possibly, ultraviolet-absorbing agents such as substituted benzotriazoles in a proportion of 0.5 to 5 % by weight.

5. Pane comprising a covering layer according to one of Claims 1 to 4.

6. Sheet of plastics material, characterized in that it comprises a layer of polyurethane according to one of Claims 1 to 4.

7. Sheet according to Claim 6, characterized in that the polyurethane layer is associated with a layer of polyurethane having energy-absorber properties.

## Patentansprüche

1. Verwendung einer Deckschicht aus transparentem Polyurethan mit Selbstheileigenschaften für Glasscheiben oder transparente Gegenstände aus Glas und/oder aus Kunststoff, wobei die Deckschicht aus einer eine mehrfunktionelle Isocyanatkomponente und eine mehrfunktionelle Polyolkomponente umfassenden und gegebenenfalls einen Reaktionskatalysator und andere Hilfsstoffe aufweisenden Reaktionsmischung hergestellt ist, dadurch gekennzeichnet, daß die Isocyanatkomponente der Reaktionsmischung aus den Biureten oder den trifunktionellen Isocyanuraten des 1,6-Hexamethylendiisocyanats mit einem Gehalt an NCO-Gruppen von 15 bis 25 Gew.-%, und die Polyolkomponente der Reaktionsmischung aus den eine Funktionalität von mehr als 2 aufweisenden Polyesterpolyolen mit einem Gehalt von OH-Gruppen von 3 bis 12 Gew.-% besteht, und daß die Reaktionsmischung ein NCO/OH-Verhältnis, ausgedrückt in Äquivalenten, von 0,9 bis 1,1, und vorzugsweise von ungefähr 1 aufweist.

2. Verwendung einer Deckschicht aus Polyurethan nach Anspruch 1, dadurch gekennzeichnet, daß als Polyolkomponente ein schwach verzweigtes Polyesterpolyol auf der Basis von Trimethylolpropan, 1,6-Hexandiol, Adipinsäure, o-Phtalsäure und i-Phthalsäure mit einem Gehalt an OH-Gruppen von 3 bis 5 Gewichtsprozent verwendet wird.

3. Verwendung einer Deckschicht aus Polyurethan nach Anspruch 1, dadurch gekennzeichnet, daß als Polyolkomponente ein trifunktionelles Polycaprolacton mit einem Gehalt an OH-Radikalen von 8 bis 12 Gew.-% verwendet wird.

4. Verwendung einer Deckschicht aus Polyurethan nach einem der Ansprüche 1 bis 3, dadurch gekennzeichnet, daß die Reaktionsmischung wenigstens eines der folgenden Additive enthält: Dibutylzinndilaurat als Reaktionskatalysator, eine oder mehrere chemische Verbindungen wie Silikonöle, Silikonharze oder fluorierte Alkylester in einer Menge von 0,05 bis 0,15 Gew.-% als Verlaufsmittel, 0,5 bis 2 Gew.-% Bis (1,2,2,6,6-pentamethyl-4-piperidyl)sebazat als Lichtschutzmittel und ggf. UV-Absorptionsmittel wie substituierte Benzotriazole in einer Menge von 0,5 bis 5 Gew-%.

5. Glasscheibe mit einer Deckschicht nach einem der Ansprüche 1 bis 4.

6. Scheibe aus Kunststoff, dadurch gekennzeichnet, daß sie eine Schicht aus Polyurethan nach einem der Ansprüche 1 bis 4 umfaßt.

7. Scheibe nach Anspruch 6, dadurch gekennzeichnet, daß die Polyurethanschicht mit einer energieabsorbierende Eigenschaften aufweisenden Polyurethanschicht verbunden ist.